Europäisches Patentamt

European Patent Office

Office européen des brevets

(11) Veröffentlichungsnummer: **0 240 676**

**A1**

(12) # EUROPÄISCHE PATENTANMELDUNG

(21) Anmeldenummer: **87102226.5**

(22) Anmeldetag: **17.02.87**

(51) Int. Cl.⁴: **B60G 11/10 , F16F 1/36**

(30) Priorität: **18.02.86 AT 423/86**

(43) Veröffentlichungstag der Anmeldung:
**14.10.87 Patentblatt 87/42**

(84) Benannte Vertragsstaaten:
**AT BE CH DE ES FR GB GR IT LI NL SE**

(71) Anmelder: **HOESCH-ISOCAR Faserverstärkte Federn Gesellschaft m.b.H.**
**Industriestrasse 2**
**A-7000 Eisenstadt(AT)**

(72) Erfinder: **Woltron, Herbert Dipl.-Ing.**
**Bachgasse 1**
**D-6520 Worms 15(DE)**

(74) Vertreter: **Stampfer, Heinz**
**ISOVOLTA Österreichische Isolierstoffwerke**
**AG Industriezentrum-Süd**
**A-2351 Wiener Neudorf(AT)**

(54) **Insbesondere zur Mitteinspannung geeignete Einspannvorrichtung für eine Blattfeder aus faserverstärktem Kunststoff.**

(57) Die Einspannvorrichtung (3) weist einen den Blattfederkörper (1) umschließenden Einspannkäfig aus Stahl auf, der aus zwei miteinander in Eingriff stehenden und dabei in Federlängsrichtung gegeneinander nicht verschiebbaren Einspannkäfig-Hälften (8,9) besteht. Der Blattfederkörper (1) ist dabei an seiner Ober-und Unterseite (4,5) mit jeweils einer mechanisch steifen Auflage (6,7) aus faserverstärktem Kunststoff verbunden, welche mit den Einspannkäfig-Hälften (8,9) formschlüssig in Eingriff stehen, wodurch eine Relativbewegung in Federlängsrichtung zwischen der Ober-bzw. Unterseite (4,5) des Blattfederkörpers (1) und dem Einspannkäfig weitgehend vermieden wird. Diese formschlüssige Verbindung erfolgt vorzugsweise dadurch, daß in den Anpreßflächen (12,13) der Einspannkäfig-Hälften (8,9), über die bei eingebauter Blattfeder (1) die Einspannkäfig-Hälften (8,9) gegen die Kunststoff-Auflagen (6,7) gepreßt werden, Vertiefungen, Durchbrüche oder Löcher vorgesehen sind, in welche Vorsprünge der Kunststoff-Auflagen (6,7) hineinreichen.

Fig. 1

## Insbesondere zur Mitteneinspannung geeignete Einspannvorrichtung für eine Blattfeder aus faserverstärktem Kunststoff

Die Erfindung betrifft eine insbesondere zur Mitteneinspannung geeignete Einspannvorrichtung aus faserverstärktem Kunststoff mit einem den Blattfederkörper umschließenden Einspannkäfig, der zwei miteinander in Eingriff stehende und dabei in Federlängsrichtung gegeneinander nicht verschiebbare Käfighälften aufweist, die mit Hilfe von Spannelementen gegen die Ober-und Unterseite des Blattfederkörpers gedrückt werden.

Eine Einspannvorrichtung dieser Art ist aus der GB-A-2100 835 bekannt. Bei dieser Einspannvorrichtung weist der den Blattfederkörper umschließende Einspannkäfig zwei Käfighälften mit U-förmigem Querschnitt auf, die an den U-Schenkeln über Ausnehmungen bzw. Nasen miteinander in Eingriff stehen, so daß sie in Federlängsrichtung gegeneinander nicht verschiebbar sind. Zwischen den Käfighälften und der Ober-bzw. Unterseite des Blattfederkörpers sind Polsterplatten aus Gummi eingefügt, die beim Zusammenspannen der beiden Käfighälften zum Käfig, welche gleichzeitig mit der Befestigung des Einspannkäfigs an der Fahrzeugachse z.B. mit Hilfe von Briden erfolgt, etwa um die Hälfte ihrer unbelasteten Dicke komprimiert werden. Die Einfügung der Polsterplatten aus Gummi hat den Zweck, die bei Federbelastung zwischen der Ober-bzw. Unterseite des Blattfederkörpers und dem Einspannkäfig auftretenden Schubspannungen niedrig zu halten.

Solche Schubspannungen treten nämlich z.B. auch bei mit Bezug auf die Mitteneinspannung symmetrischen Blattfedern dann auf, wenn diese einer unsymmetrischen Belastung, die in der Regel eine dynamische Belastung ist, unterworfen werden. Auch wenn die über die Mitteneinspannung an der Ober-bzw. Unterseite des Blattfederkörpers angreifenden Schubspannungen durch entsprechende Einspannbedingungen niedrig gehalten werden, so treten bei solchen unsymmetrischen Belastungen des auf Biegung beanspruchten Blattfederkörpers in etwa in dessen neutraler Zone Schubspannungsmaxima auf, die wegen der geringen Scherfestigkeit des Kunststoff-Blattfederkörpers in Ebenen parallel zur Blattfeder-Ober-bzw. -Unterseite zur Zerstörung des Blattfederkörpers führen können.

Der Erfindung liegt nun die Aufgabe zugrunde, eine Einspannvorrichtung der eingangs der Beschreibung genannten Art anzugeben, bei der unter denselben Belastungsbedingungen die insbesondere im Bereich der Einspannvorrichtung im Blattfederkörper auftretende Schubspannungsmaxima gegenüber den Verhältnissen bei Blattfedern mit einer bekannten Einspannvorrichtung wesentlich verringert werden.

Diese Aufgabe wird in der erfindungsgemäßen Einspannvorrichtung gelöst, die dadurch gekennzeichnet ist, daß an der Stelle der Einspannvorrichtung der Blattfederkörper an seiner Ober-und Unterseite jeweils mit einer mechanisch steifen Auflage aus faserverstärktem Kunststoff verbunden ist, gegen welche die zugehörigen Einspannkäfig-Hälften mit ihren Anpreßflächen gedrückt werden, wobei jeweils die Form der Anpreßflächen eine Relativbewegung in Federlängsrichtung zwischen der Anpreßfläche und der an sie anliegenden Kunststoff-Auflage verhindert. Dabei können diese Anpreßflächen vorteilhaft Vertiefungen aufweisen, in welche Vorsprünge der Kunststoff-Auflagen hineinreichen.

Gemäß einer vorteilhaften Ausgestaltung der Erfindung haben die Vertiefungen in den Käfighälften-Anpreßflächen die Form von quer zur Blattfeder-Längsrichtung verlaufenden Nuten.

In einer anderen vorteilhaften Ausgestaltung der erfindungsgemäßen Einspannvorrichtung haben die Vertiefungen die Form von durch die Wände der Einspannkäfig-Hälften hindurchreichenden Durchbrüchen und/oder Löchern.

Die Erfindung wird nachstehend anhand der Figuren 1 bis 3, die eine vorteilhafte Ausführungsform der erfindungsgemäßen Einspannvorrichtung illustrieren, näher erläutert.

Dabei zeigen

Fig. 1 in einer Teildarstellung im Längsschnitt den mittleren Bereich einer Blattfeder aus faserverstärktem Kunststoff mit der als Mitteneinspannung dienenden Einspannvorrichtung,

Fig. 2 den der Fig. 1 entsprechenden Aufriß und

Fig. 3 einen Querschnitt durch die Blattfeder gemäß der Linie III-III in Fig. 1.

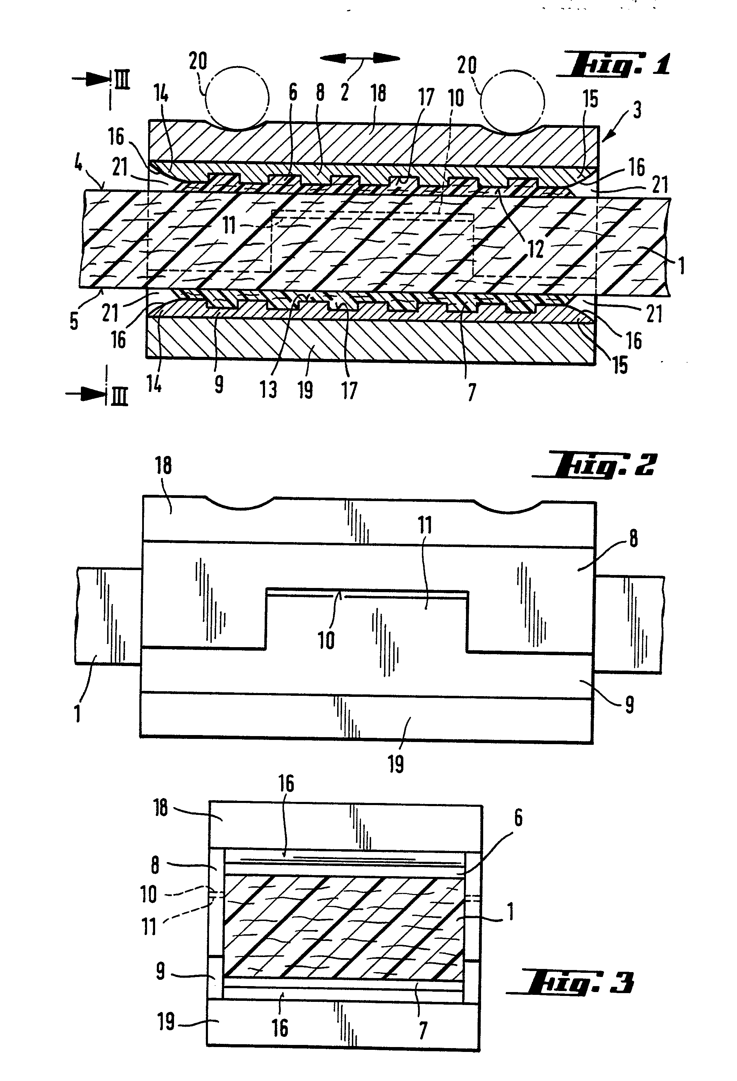

Auf den Blattfederkörper 1, der z.B. aus Epoxydharz und in Federlängsrichtung 2 verlaufenden Glasfaserrovings als Verstärkungsmaterial besteht, sind im Bereich der Einspannvorrichtung 3 an der Ober-und Unterseite 4, 5 des Blattfederkörpers 1 Auflagen 6, 7 aus glasfaserverstärktem Epoxydharz aufgebracht. Die Einspannvorrichtung 3 weist ferner einen den Blattfederkörper 1 umfassenden Einspannkäfig mit zwei Einspannkäfig-Hälften 8, 9 aus Stahl mit jeweils U-förmigem Querschnitt (siehe Fig. 3) auf, die an den U-Schenkeln über Ausnehmungen 10 und Nasen 11 (siehe Fig. 2) miteinander in Eingriff stehen, so daß sie in Federlängsrichtung 2 gegeneinander nicht verschiebbar sind.

Die beiden Einspannkäfig-Hälften 8, 9 weisen an ihrer Innenseite Anpreßflächen 12, 13 auf, mit welchen sie - in eingebautem Zustand der Blattfeder - gegen die Auflagen 6, 7 des Blattfederkörpers 1 gepreßt werden. Die Anpreßflächen 12, 13, die an den beiden Enden 14, 15 der Einspannvorrichtung 3 in konvex nach außen gekrümmten Bereichen 16 auslaufen, sind mit Vertiefungen 17 in Form von quer zur Federlängsrichtung 2 verlaufenden Nuten versehen, in welche das Material der Auflagen 6, 7 in Form von Vorsprüngen hineinreicht.

Zur Befestigung der mit dem Einspannkäfig versehenen Blattfeder an einen ungefederten Teil eines Fahrzeuges, also z.B. an der Fahrzeugachse, dienen eine Bridenplatte 18 und eine plattenförmige Achsauflage 19, die an der oberen bzw. unteren Einspannkäfig-Hälfte 8, 9 anliegen und mittels der mit 20 (siehe Fig. 1) angedeuteten Briden mit einem weitgehend gleichmäßigen Flächendruck gegen die Einspannkäfig-Hälften 8, 9 gepreßt werden.

Für die Ausbildung der Auflagen 6, 7 und das Anbringen des Einspannkäfigs wird vorzugsweise wie folgt vorgegangen. Auf die Anpreßfläche 12 der unteren Einspannkäfig-Hälfte 9 werden in mehreren Lagen übereinander mit einem Epoxydharz-Härtergemisch imprägnierte Glasgewebezuschnitte aufgelegt, so daß sie eine Schicht von etwa 2 mm Dicke bilden. Das dabei verwendete Glasgewebe hat z.B. ein Flächengewicht von 450 g/m² und ist mit einem Epoxydharz-Härtergemisch imprägniert, das aus einem Epoxydharz auf Basis von Bisphenol A und einem diaminischen Härter besteht.

Nun wird der Blattfederkörper 1 in die untere Einspannkäfig-Hälfte 9 eingelegt, auf die Oberseite 4 des Blattfederkörpers 1 dann eine weitere imprägnierte Glasfasergewebeschicht aufgelegt und auf diese dann die obere Einspannkäfig-Hälfte 8 so aufgesetzt, daß die beiden Einspannkäfig-Hälften 8, 9 miteinander in Eingriff stehen.

An dem so hergestellten Aufbau werden nun an den mit 21 bezeichneten Stellen Kunststoffkeile eingesetzt, welche dabei die gekrümmten Bereiche 16 der Anpreßflächen 12, 13 abdecken. Der Aufbau wird dann über den Bereich des Einspannkäfigs in eine Preßvorrichtung mit auf 140°C beheizten, zueinander planparallelen Preßplatten eingebracht, in welcher die beiden Einspannkäfig-Hälften 8, 9 aufgeheizt und unter leichtem Druck gegeneinander gepreßt werden, wodurch das Material der mit Epoxydharz-Härtergemisch imprägnierten Glasfasergewebe in die Vertiefungen 17 der Anpreßflächen 12, 13 eindringt und auch sonst die Form der Auflagen 6, 7, wie in Fig. 1 gezeigt, annimmt. Nach einer Verweilzeit von 10 min ist das Epoxydharz so weit gehärtet, daß der Blattfederkörper mit dem mit ihm nun provisorisch verbundenen Einspannkäfig aus der Preßvorrichtung ausgebracht werden kann.

Bei der erfindungsgemäßen Einspannvorrichtung wird bei einer unsymmetrischen Belastung der Blattfeder eine Relativverschiebung zwischen der Ober-bzw. der Unterseite 4, 5 des Blattfederkörpers 1 und dem sehr steifen Einspannkäfig weitgehend verhindert, d.h. eine solche Relativverschiebung wird nur in einem Ausmaß zugelassen, wie es durch eine entsprechende Verformung der Auflagen 6, 7 ermöglicht wird. Dies hat zwar Folge, daß zwischen den Einspannkäfig-Hälften 8, 9 und der Ober-bzw. Unterseite 4, 5 des Blattfederkörpers 1 relativ hohe Schubspannungen entstehen können, gleichzeitig aber - wie gefunden wurde - die für die Festigkeit der Blattfeder kritischen Schubspannungsmaxima in der neutralen Zone des Blattfederkörpers im Sinne der der Erfindung zugrundeliegenden Aufgabe wesentlich verringert werden.

Gemäß einer vorteilhaften Variante der erfindungsgemäßen Einspannvorrichtung reichen die in den Anpreßflächen der Einspannkäfig-Hälften vorgesehenen Vertiefungen durch die Wandstärke der Einspannkäfig-Hälften hindurch, d.h. sie formen in diesen Durchbrüche bzw. Löcher, die auf einfache Weise durch Stanzen oder Bohren hergestellt werden können. Außerdem können bei Schwankungen in der zur Herstellung der Auflagen 6, 7 eingesetzten Epoxydharzmenge bei der gleichen Enddicke des Einspannkäfigs diese Durchbrüche bzw. Bohrungen mit dem glasfaserverstärkten Epoxydharz in weiten Grenzen mehr oder weniger gefüllt werden, ohne daß dadurch die Stärke der formschlüssigen Verbindung zwischen dem Einspannkäfig und den Auflagen 6, 7 wesentlich verändert wird.

**Ansprüche**

1. Einspannvorrichtung für eine Blattfeder aus faserverstärktem Kunststoff mit einem den Blattfederkörper umschließenden Einspannkäfig, der zwei miteinander in Eingriff stehende und dabei in Federlängsrichtung gegeneinander nicht verschiebbare Käfighälften aufweist, die mit Hilfe von Spannelementen gegen die Ober-und Unterseite des Blattfederkörpers gedrückt werden, dadurch gekennzeichnet, daß an der Stelle der Einspannvorrichtung (3) der Blattfederkörper (1) an seiner Ober-und Unterseite (4, 5) jeweils mit einer mechanisch steifen Auflage (6, 7) aus faserverstärktem Kunststoff verbunden ist, gegen welche die zugehörigen Einspannkäfig-Hälften (8, 9) mit ihren Anpreßflächen (12, 13) gedrückt werden, wobei jeweils die Form der Anpreßflächen (12, 13) eine Relativbewebung in Federlängsrichtung (2) zwischen der Anpreßfläche (12, bzw. 13) und der an sie anliegenden Kunststoff-Auflage (6 bzw. 7) verhindert.

2. Einspannvorrichtung nach Anspruch 1, dadurch gekennzeichnet, daß die Anpreßflächen Vertiefungen (17) aufweisen, in welche Vorsprünge der Kunststoff-Auflagen (6, 7) hineinreichen.

3. Einspannvorrichtung nach Anspruch 2, dadurch gekennzeichnet, daß die Vertiefungen (17) in den Käfighälften-Anpreßflächen (12, 13) die Form von quer zur Federlängsrichtung (2) verlaufende Nuten haben.

4. Einspannvorrichtung nach Anspruch 2, dadurch gekennzeichnet, daß die Vertiefungen die Form von durch die Wände der Einspannkäfig-Hälften hindurchreichenden Durchbrüchen und/oder Löchern haben.

Fig. 1

Fig. 2

Fig. 3

# EUROPÄISCHER RECHERCHENBERICHT

**Europäisches Patentamt**

Nummer der Anmeldung

EP 87 10 2226

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 6, Nr. 193 (M-160)[1071], 2. Oktober 1982; & JP-A-57 101 139 (NIHON HATSUJIYOU K.K.) 23-06-1982 * Zusammenfassung; Figuren 1-4 * | 1-4 | B 60 G 11/10 F 16 F 1/36 |
| | --- | | |
| A | US-A-4 611 793 (TOYOTA) * Spalte 3, Zeile 51 - Spalte 4, Zeile 17; Figuren 5,6 * | 1,2 | |
| | --- | | |
| A | PATENT ABSTRACTS OF JAPAN, Band 7, Nr. 153 (M-226)[1298], 5. Juli 1983; & JP-A-58 61 343 (MITSUBISHI RAYON K.K.) 12-04-1983 * Zusammenfassung * | 1,3 | |
| | --- | | RECHERCHIERTE SACHGEBIETE (Int. Cl.4) |
| A | EP-A-0 161 155 (RENAULT) * Seite 2, Zeile 31 - Seite 3, Zeile 21; Figur 1 * | 1,2,4 | B 60 G 11 F 16 F 1 |
| | --- | | |
| A | EP-A-0 162 189 (HOESCH AG) * Figuren 1-5 * | 1,3,4 | |
| | --- | | |
| D,A | GB-A-2 100 835 (THE BUDD CO.) * Insgesamt * | 1 | |
| | ----- | | |

Der vorliegende Recherchenbericht wurde für alle Patentansprüche erstellt.

| Recherchenort DEN HAAG | Abschlußdatum der Recherche 03-06-1987 | Prüfer LINTZ C.H. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82